(19) Europäisches Patentamt
European Patent Office
Office européen des brevets

(11) **EP 1 939 667 A1**

(12) **EUROPEAN PATENT APPLICATION**

(43) Date of publication:
**02.07.2008 Bulletin 2008/27**

(51) Int Cl.:
*G02B 26/12* (2006.01)    *H04N 1/191* (2006.01)

(21) Application number: **07120502.5**

(22) Date of filing: **12.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **29.12.2006 KR 20060138126**

(71) Applicant: **Samsung Electronics Co., Ltd.**
**Suwon-si,**
**Gyeonggi-do 442-742 (KR)**

(72) Inventor: **Park, Gi-sung,**
**Hwanggol Maeul 1-danji Apt. 101-106**
**Gyeonggi-do,**
**Suwon-si (KR)**

(74) Representative: **Waddington, Richard**
**Appleyard Lees**
**15 Clare Road**
**Halifax, Yorkshire HX1 2HY (GB)**

(54) **Light scanning unit and image forming apparatus having the same**

(57)    A light scanning unit to scan light beams to a plurality of photoconductive bodies (70). The light scanning unit includes: a light source (31) to emit a plurality of beams; a beam-deflecting unit (40) to form scanning beams from the beams emitted by the light source (31); a plurality of reflecting mirrors (50) to reflect the scanning beams; and an optical imaging system (60) to focus the reflected scanning beams onto each of the photoconductive bodies (70). The scanning beams can be reflected by the reflecting mirrors (50) at a first angle that is between about 60° and about 90° or at a second angle that is supplementary to the first angle.

FIG. 3

**Description**

BACKGROUND OF THE INVENTION

Field of the Invention

The present invention relates to a tandem-type light scanning unit and an image forming apparatus having the same.

Description of the Related Art

Generally, an image forming apparatus, such as, a laser beam printer, a digital copier, a facsimile machine, etc., includes a light scanning unit. A light scanning unit deflects a beam emitted from a light source and scans the beam on a photoconductive body in a main scanning direction. A latent image is formed on the photoconductive body, through a main scanning process using the light scanning unit, and a sub-scanning process using the rotation of the photo conductive body.

An image forming apparatus can be classified as a multi-path type, in which each color image is formed in sequence, and a single-path type, in which a full color image is formed by a single print process. A color image forming apparatus of the single-path type uses a light scanning unit to concurrently scan a light beam on the photoconductive bodies that form each color image (yellow, magenta, cyan and black images).

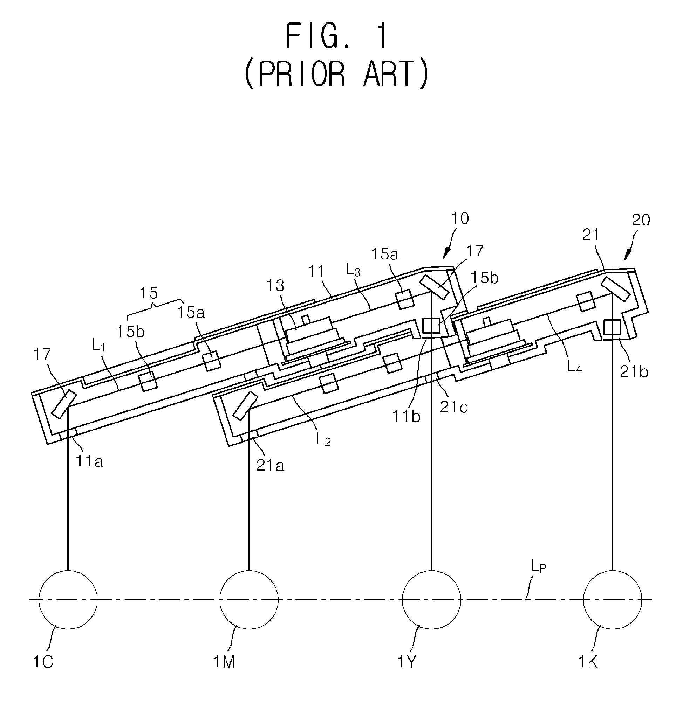

FIG. 1 is a sectional view schematically illustrating a conventional tandem-type light scanning unit. Referring to FIG. 1, a conventional tandem-type light scanning unit includes first and second light scanning units 10 and 20, to scan light onto first to fourth photoconductive bodies 1C, 1M, 1Y, and 1K, respectively forming the cyan, magenta, yellow and black color images that make up a latent image.

The first light scanning unit 10 scans light beams to the first and third photoconductive bodies 1C and 1Y. The first light scanning unit 10 includes: two light sources (not shown) accommodated in a housing 11; a beam-deflecting unit 13 to deflect light beams emitted from the two light sources, along first and third paths $L_1$ and $L_3$; imaging lenses 15 provided in the first and third paths $L_1$ and $L_3$, to focus the beams ,scanned by the beam-deflecting unit 13, to the first and third photoconductive bodies 1C and 1Y; and reflecting mirrors 17 to alter the path of the scanning beams. Here, the housing 11 is formed with light windows 11a and 11b, through which scanning beams, proceeding in the first and third paths $L_1$ and $L_3$, are transmitted to the photoconductive bodies 1C and 1Y.

The second light scanning unit 20 is disposed adjacent to the first light scanning unit 10 and scans beams to the second and fourth photo conductive bodies 1M and 1K, through the second and fourth paths $L_2$ and $L_4$. The second light scanning unit 20 has the same optical configuration as the first light scanning unit 10. A housing 21 is formed with light windows 21a, 21b, and 21c, through which scanning beams transmitted along the second and fourth paths $L_2$ and $L_4$ and are transmitted.

Hereinafter, a scanning path, of light scanned by the first light scanning unit 10, will be described. The beam to be scanned onto the first photoconductive body 1C is deflected by the beam-deflecting unit 13. An image position and a scanning angle thereof are corrected by two imaging lenses 15a and 15b disposed on the first path $L_1$. The beam is then reflected by the reflecting mirror 17 and thereby directed through the light window 11a, to scan the first photoconductive body 1C. The two imaging lenses 15a and 15b, are disposed between the beam-deflecting unit 13 and the reflecting mirror 17.

The beam, to scan the third photoconductive body 1Y, is deflected by the beam-deflecting unit 13, and then penetrates the light windows 11b and 21c, to scan the third photoconductive body 1Y, via the two imaging lenses 15a and 15b and the reflecting mirror 17, disposed on the third path $L_3$. The imaging lens 15a is disposed between the beam-deflecting unit 13 and the reflecting mirror 17. The imaging lens 15b is disposed between the reflecting mirror 17 and the light window 11b.

A light scanning unit having the described configuration has light paths having the same length from a the light source to the first and third photoconductive bodies 1C and 1Y, and the imaging lenses 15 have the same optical performance. As the order of the imaging lenses 15a and 15b differs according to a path, the distance, from the light windows 11a and 11b to the first and third photoconductive bodies 1C and 1Y, differs. The second light scanning unit 20 has the same optical configuration as described above.

A conventional tandem-type light scanning unit has the same optical configuration for each of the first to fourth photoconductive bodies 1C, 1M, 1Y, and 1K, which are spaced apart from each other on the line $L_P$. Accordingly, if the photoconductive body is not disposed on the same line, for example, if a transfer drum is used, the conventional configuration cannot be used thereto. Accordingly, the conventional light scanning unit is inapplicable to an image forming apparatus using a simplified configuration including a single transfer drum to transfer a toner image and to prevent color deviation to improve quality.

The costs of using a transfer drum can be reduced as the diameter of the transfer drum decreases, but it is therefore also necessary to reduce the pitch among a plurality of photoconductive bodies disposed along the outer surface of the transfer drum.

SUMMARY OF THE INVENTION

The present invention provide a light scanning unit and an image forming apparatus including the same. The light scanning unit has an improved configuration applicable to a tandem-type image forming apparatus that includes a transfer drum and a reduced pitch among a plurality of photoconductive bodies disposed along the transfer drum. Aspects of the present teachings thereby provide a light scanning unit having a compact configuration.

According to the present invention there is provided an apparatus and method as set forth in the appended claims. Other features of the invention will be apparent from the dependent claims, and the description which follows.

According to an aspect of the present invention there is provided a light scanning unit to control light beams in an image forming apparatus comprising a plurality of photoconductive bodies disposed upon an outer surface of a transfer drum, the light scanning unit comprising: at least one light source to emit the light beams; a first beam-deflecting unit to deflect the emitted light beams to form a first and a second scanning beam; a plurality of reflecting mirrors disposed in light paths between the first beam deflecting unit and the photoconductive bodies, to reflect the first scanning beam at a first angle and to reflect the second scanning beam at a second angle; and an optical imaging system disposed in light paths between the plurality of reflecting mirrors and the plurality of photoconductive bodies, to focus the reflected first and second scanning beams onto the plurality of photoconductive bodies, wherein the first angle that is less than 90° and greater than 60°, and the second angle is supplementary to the first angle.

Preferably, the plurality of photoconductive bodies comprises first to fourth photoconductive bodies disposed equally spaced and in order along the outer surface of the transfer drum; the light scanning unit further comprises a second beam-deflecting unit to form third and fourth scanning beams; and two of the plurality of reflecting mirrors are reflect the third and forth scanning beams to the second and fourth photoconductive bodies and are to reflect the first and second scanning beams to the first and third photoconductive bodies.

Preferably, each of the emitted light beams travels a same distance from a respective light source to a respective photoconductive body.

Preferably, a distance between adjacent reflected scanning beams is from about 29.7 mm to about 36.3 mm.

Preferably, the image forming apparatus comprising the light scanning unit further comprises: the plurality of photoconductive bodies on which corresponding first and second scanning beams scanned by the light scanning unit form a latent image; a development unit disposed adjacent to each of the respective photoconductive bodies, and develops a predetermined color image to the respective photoconductive bodies; and a transfer drum which comprises a curved outer surface which faces and contacts the plurality of photoconductive bodies, to transfer an image which is developed in the plurality of photoconductive bodies to a printing medium.

Preferably, the plurality of photoconductive bodies comprise first to fourth photoconductive bodies disposed equally spaced and in order around the transfer drum; the first and second scanning beams are respectively directed to the first and third photoconductive bodies; and the light scanning unit further comprises a second beam-deflecting unit to form third and forth scanning beams respectively directed at the second and fourth photoconductive bodies.

Preferably, the first and second beam-deflecting units and the reflecting mirrors are disposed so that at least one of scanning beams formed by the first beam-deflecting unit crosses at least one of the reflected scanning beams formed by the second beam-deflecting unit.

Preferably, the at least one light source comprises first to fourth light sources which respectively emit light beams to the first to fourth photoconductive bodies; the light beams which are emitted in the first and third light sources are scanned by the first beam deflecting unit; and light beams which are emitted in the second and fourth light sources are scanned by the second beam deflecting unit.

Preferably, the image forming apparatus further comprises: first to fourth collimating lenses which are respectively disposed on light paths between the first to fourth light sources and the first and second beam deflecting units, and collect the light beams emitted by the first to fourth light sources, and first to fourth cylindrical lenses which are respectively disposed on light paths between the first to fourth light sources and the first and second beam deflecting units, and shape the light beams which are collimated by the first to fourth collimating lenses.

Preferably, the plurality of reflecting mirrors comprise: a first reflecting mirror which is disposed on a light path between the first beam deflecting unit and the first photoconductive body, a second reflecting mirror which is disposed on a light path between the second beam deflecting unit and the second photoconductive body, a third reflecting mirror which is disposed on a light path between the first beam deflecting unit and the third photoconductive body, and a fourth reflecting mirror which is disposed on a light path between the second beam deflecting unit and the fourth photoconductive body.

Preferably, the optical imaging system comprises first to fourth imaging lenses which are respectively disposed between the first to fourth reflecting mirrors and the first to fourth photoconductive bodies.

Preferably, each of the scanning beams travels the same distance from a respective deflecting unit to a respective photoconductive body.

Preferably, a distance between adjacent reflected scanning lines is from about 29.7 mm to about 36.3 mm.

Preferably, the diameter of each of the photoconductive bodies is approximately 16mm, and the diameter of the transfer drum is approximately 120mm.

According to another aspect of the present invention there is provided a light scanning unit to control light beams in an image forming apparatus comprising a plurality of photoconductive bodies disposed upon an outer surface of a transfer drum, the light scanning unit comprising: at least one light source to emit the light beams; and a first beam-deflecting unit to deflect the emitted light beams to form a first and a second scanning beam; and a mirror system to reflect the first scanning beam to define a first beam path between the first beam deflecting unit and a first one of the plurality of photo conductive drums and to reflect the second scanning beam to define a second beam path between the first beam deflecting unit and a second one of the plurality of photo conductive drums, the first beam path being other than the second beam deflecting path, wherein: the length of the first beam path is equal to the length of the second beam path, and the plurality of photoconductive bodies are disposed in an arc along the outer surface of the transfer drum.

Preferably, the reflected first and second scanning beams are parallel to each other.

Preferably, the mirror system comprises: a first reflecting mirror disposed on the first beam path, between the first beam deflecting unit and the first photoconductive body, to reflect the first scanning beam at a first angle to the first photoconductive body; and a second reflecting mirror disposed on the second beam path, between the first beam deflecting unit and the second photoconductive body, to reflect the second scanning beam at a second angle to the second photoconductive body.

Preferably, the first angle that is less than 90° and greater than 60°, and the second angle is supplementary to the first angle.

Additional aspects and/or advantages of the invention will be set forth in part in the description which follows and, in part, will be obvious from the description, or may be learned by practice of the invention.

BRIEF DESCRIPTION OF THE DRAWINGS

These and/or other aspects and advantages of the invention will become apparent and more readily appreciated from the following description of the exemplary embodiments, taken in conjunction with the accompanying drawings, in which:

FIG. 1 is a sectional view schematically illustrating a conventional light scanning unit;
FIG. 2 is a plane view schematically illustrating an optical configuration of a light scanning unit, according to an exemplary embodiment of the present invention;
FIG. 3 is a sectional view schematically illustrating the optical configuration of the light scanning unit, according to the exemplary embodiment of the present invention;
FIGs. 4 and 5 are sectional views schematically illustrating optical configurations of light scanning units, according to comparison examples; and
FIG. 6 is a sectional view schematically illustrating an image forming apparatus, according to an exemplary embodiment of the present invention.

DETAILED DESCRIPTION OF THE EMBODIMENTS

Reference will now be made in detail to the various aspects of the exemplary embodiments of the present invention, examples of which are illustrated in the accompanying drawings, wherein like reference numerals refer to the like elements throughout. The embodiments are described below, in order to explain the aspects of the present invention by referring to the figures.

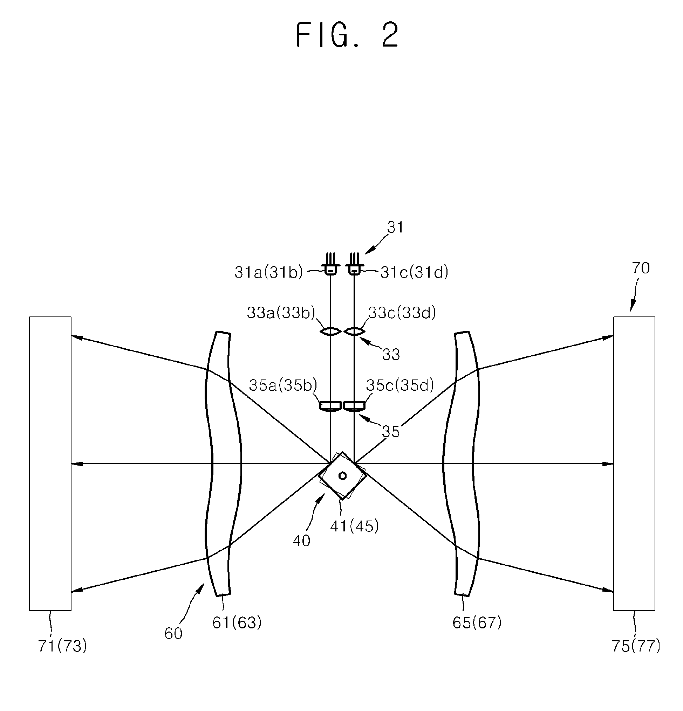

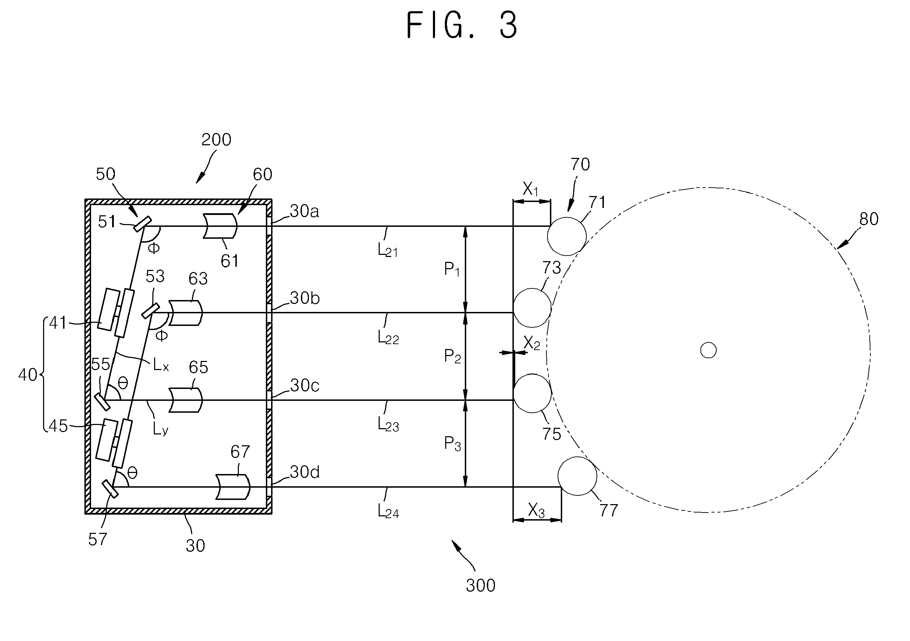

Referring to FIGS. 2 and 3, a light scanning unit 200, according to an exemplary embodiment of the present invention, comprises: a housing 30 having a plurality of light windows 30a, 30b, 30c, and 30d, through which a scanning beam passes; light sources 31 contained in the housing 30; and an optical imaging system 60. An imaging apparatus 300, as shown, comprises the light scanning unit 200; beam-deflecting units 40; reflecting mirrors 50; photoconductive bodies 70; and a transfer drum 80. The light scanning unit 200 generates a plurality of light beams, and scans the light beams onto the photoconductive bodies 70, to form single color images thereon.

The photoconductive bodies 70 are disposed along an outer surface of the transfer drum 80 and are spaced apart from one another at a regular interval. A latent image is formed on each of the photoconductive bodies 70 by a scanning beam. As referred to herein, a light beam, a scanning light beam, a scanning beam, a scanning line, and a beam are terms that are used interchangeably herein, for convenience. The photoconductive bodies 70 include first to fourth photo conductive bodies 71, 73, 75, and 77 disposed spaced apart at a regular interval on the outer surface of the transfer drum 80. The photo conductive bodies 70 are to form sub-images of yellow toner, magenta toner, cyan toner, or black toner, that make up a color image. As shown in FIG. 3, the photoconductive bodies are aligned along a curved surface having a constant radius. However, it is understood that the bodies can be otherwise arranged and can be arranged along non-constant radius surfaces or other shapes and profiles.

The light sources 31 are turned on and off by a driving circuit (not shown) and emit a plurality of beams corresponding to an image signal. The light sources 31 comprise first to fourth light sources 31a, 31b, 31c, and 31d, respectively emitting first to fourth light beams $L_{21}$, $L_{22}$, $L_{23}$, and $L_{24}$, which are scanned onto the first to fourth photoconductive bodies 71, 73, 75, and 77.

While not limited thereto, light sources 31 can comprise a semiconductor device, such as, a laser diode, a light emitting diode (LED), or any other suitable light producing devices known in the art or to be developed. The light sources 31 may comprise a semiconductor element having a plurality of light emitting points, or combination of a plurality of semiconductor devices, each having a single light emitting point. The light sources 31 concurrently produce multiple beams, and can be applied to a tandem-type image forming apparatus that forms a color image using a single path. The beam-deflecting units 40 deflect the plurality of beams, emitted from the light sources 31, to the plurality of photoconductive bodies 70. The deflection of the beams can produce scanning beams that oscillate along a scanning path. The beam-deflecting units 40 comprise a first beam-deflecting unit 41 and a second beam deflecting unit 45. The first beam deflected unit 41 deflects first and third light beams $L_{21}$ and $L_{23}$ to the first and third photoconductive bodies 71 and 75. The second beam-deflecting unit 45 deflects emitted second and fourth light beams $L_{22}$ and $L_{24}$ to the second and fourth photoconductive bodies 73 and 77.

The distances from the first and second beam-deflecting units 41 and 45, to the first to fourth photoconductive bodies 71, 73, 75, and 77, are the same. In other words, the beam paths between the first and second beam-deflecting units 41 and 45, and the first to fourth photoconductive bodies 71, 73, 75, and 77, are the same length. In some embodiments, the beam paths, between the light sources 31 and the photoconductive bodies 70, are the same length, as shown in FIG. 2. As such, the beams $L_{21}$ and $L_{23}$, shown in FIG. 3, and the first and second beam-deflecting units 41 and 45, can be substantially parallel to each other, so a frame, to secure the deflecting units 41 and 45 in the housing 30, can be inexpensively manufactured.

The first and second beam-deflecting units 41 and 45 can be offset and/or angled with respect to each other, to prevent interference between the deflected beams. The amount of the offset and/or angle is determined to satisfy formulas 1 and 2.

The first and second beam-deflecting units 41 and 45 are disposed so that at least one of the scanning beams, deflected by the first beam-deflecting unit 41, can cross at least one of the scanning beams deflected by the second beam-deflecting unit 45. FIG. 3 illustrates an arrangement of the first and second beam-deflecting units 41 and 45 in which the second light beam $L_{22}$, emitted by the second beam-deflecting unit 45, crosses the third light beam $L_{23}$, emitted by the first beam-deflecting unit 41.

As shown, the first and second beam-deflecting units 41 and 45 comprise, for example, a polygonal mirror device, as shown in FIGs. 2 and 3. The polygonal mirror device may have four or more surfaces to direct an emitted light by rotation. However, the deflecting units 40 are not so limited. By way of example, the first and/or the second beam-deflecting units 41 and 45 may comprise a hologram disk-type beam-deflecting unit, a Galvano mirror-type beam-deflecting unit, or any other suitable beam-deflecting unit known in the art or to be developed. The beam deflecting units 40 can be said to form scanning beams.

As shown, collimating lenses 33 and cylindrical lenses 35 are provided in beam paths between the light sources 31 and the beam-deflecting units 40. The collimating lenses 33 collimate diverged beams emitted by the light sources 31. The cylindrical lenses 35 have a predetermined refractive power in a sub-scanning direction and focus beams, transmitted to the collimating lenses 33, to form a linear image on the beam-deflecting units 40. However, it is noted that the lenses 33, 35 can be otherwise disposed and/or the linear image can be otherwise achieved.

In the shown exemplary embodiment, the collimating lenses 33 and the cylindrical lenses 35 comprise first to fourth collimating lenses 33a, 33b, 33c, and 33d; and first to fourth cylindrical lenses 35a, 35b, 35c, and 35d and are respectively provided in beam paths of the first to fourth light sources 31a, 31b, 31c, and 31d.

The reflecting mirrors 50 reflect light beams deflected by the beam-deflecting units 40 to the photoconductive bodies 70. The reflecting mirrors 50 comprise first to fourth reflecting mirrors 51, 55, 53, and 57, respectively provided in the beam paths of the first to fourth light beams $L_{21}$, $L_{22}$, $L_{23}$, and $L_{24}$. That is, a single one of the reflecting mirrors 50 is disposed in the proceeding path of each corresponding laser beam $L_{21}$, $L_{22}$, $L_{23}$, and $L_{24}$.

For each deflecting unit 40, an intersection angle $\theta$, between a scanning line $L_x$, of light deflected by the corresponding beam-deflecting unit 40 toward the corresponding reflecting mirror 50, and a scanning line $L_y$, of light reflected by the corresponding reflecting mirror 50 toward the photoconductive bodies 70, can be represented by the following Formula 1.

$$\text{Formula 1}$$
$$60° < \theta < 90°$$

In FIG. 3, the angle $\theta$ is an angle of reflection of the third light beam $L_{23}$ reflected between the first beam deflecting unit 41 and the third photoconductive body 75, and the fourth light beam $L_{24}$ reflected between the second beam deflecting unit 45 and fourth photoconductive body 77. An angle $\varphi$ refers to an angle of reflection of the first light beam $L_{21}$ that is supplementary to the angle $\theta$ of the third light beam $L_{23}$; and an angle of reflection of the second light beam $L_{22}$ that is supplementary to the angle $\theta$ of the fourth light beam $L_{24}$. As shown, $\varphi$ is reflected between the first beam deflecting unit 41 and the first photoconductive body 71, and between the second beam deflecting unit 45 and the second photoconductive body 73. The angle $\varphi$ can be represented by the following Formula 2.

Formula 2

$$\varphi = 180 - \theta \ [°]$$

Formula 2 is satisfied if: the first light beam $L_{21}$ and the third light beam $L_{23}$, deflected by the first beam-deflecting unit 41, are scanned in the same plane; and if the first and third light beams $L_{21}$ and $L_{23}$, respectively reflected by the first and third reflecting mirrors 51 and 55, are parallel.

Configurations that satisfy Formulas 1 and 2 reduce pitches $P_1$, $P_2$, and $P_3$ between beams scanned to the plurality of photoconductive bodies 70, and prevent interference between adjacent scanning lines in configurations including at least two scanning lines deflected through a single beam deflecting unit. The specific reasons why an upper limit and a lower limit are established for Formula 1 are described below.

The optical imaging system 60 is disposed between the plurality of reflecting mirrors 50 and the plurality of photoconductive bodies 70 and is to focus a plurality of beams deflected by the beam-deflecting units 40 and scanned onto the plurality of photoconductive bodies 70. That is, the optical imaging system 60 focuses scanning beams, deflected by the beam-deflecting units 40 and reflected by the reflecting mirrors 50, according to different magnifying powers. The focusing is performed with respect to a main scanning direction and a subscanning direction, and is to form images on the photoconductive bodies 70. The optical imaging system 60 comprises first to fourth imaging lenses 61, 63, 65, and 67 respectively disposed between the first to fourth reflecting mirrors 51, 53, 55, and 57 and the first to fourth photo conductive bodies 71, 73, 75, and 77. The first to fourth reflecting mirrors 51, 53, 55, and 57 can be each be copies of a single reflecting member, thereby reducing cost of the optical system.

The distances between the first beam-deflecting unit 41 and the first and third reflecting mirrors 51 and 55, and the distances between the second beam-deflecting unit 45 and the second and fourth reflecting mirrors 53 and 57, are selected based on a desired spacing for the light beams scanned to the first to fourth photoconductive bodies 71, 73, 75, and 77. In other words, the distances relate to pitches $P_1$, $P_2$, and $P_3$, and horizontal position differences $X_1$, $X_2$, and $X_3$. For example, scanning line horizontal position differences $X_1$, $X_2$, and $X_3$ can respectively be 14.33mm, 0mm, and -19.73mm. The position of the reflecting mirrors 50 can be set so that the distance, of a plurality of light paths between the beam-deflecting units 40 and the plurality of photoconductive bodies 70, is the same. Accordingly, optical elements disposed in each light path can be used in common.

A vertical direction difference, between adjacent scanning lines reflected in the reflecting mirrors 50 to be scanned to the plurality of photoconductive bodies 70, refers to a pitch P. Pitch P may be represented by the following Formula 3. The pitch P represents any one of pitches $P_1$, $P_2$, and $P_3$ between adjacent light beams of the first to fourth light beams $L_{21}$, $L_{22}$, $L_{23}$, and $L_{24}$.

Formula 3

$$29.7 \leq P \leq 36.3 \ [mm]$$

Formula 3 refers to an allowable pitch interval for a light scanning unit that satisfies Formulas 1 and 2. As the interval of pitch is reduced, the diameter of the transfer roller 80 can be reduced, thereby allowing for a reduction in the size of an entire configuration. In the shown exemplary embodiment, four light beams are concurrently scanned. However, it is understood that other numbers of beams can be concurrently scanned. For example, at least two light beams may be concurrently scanned.

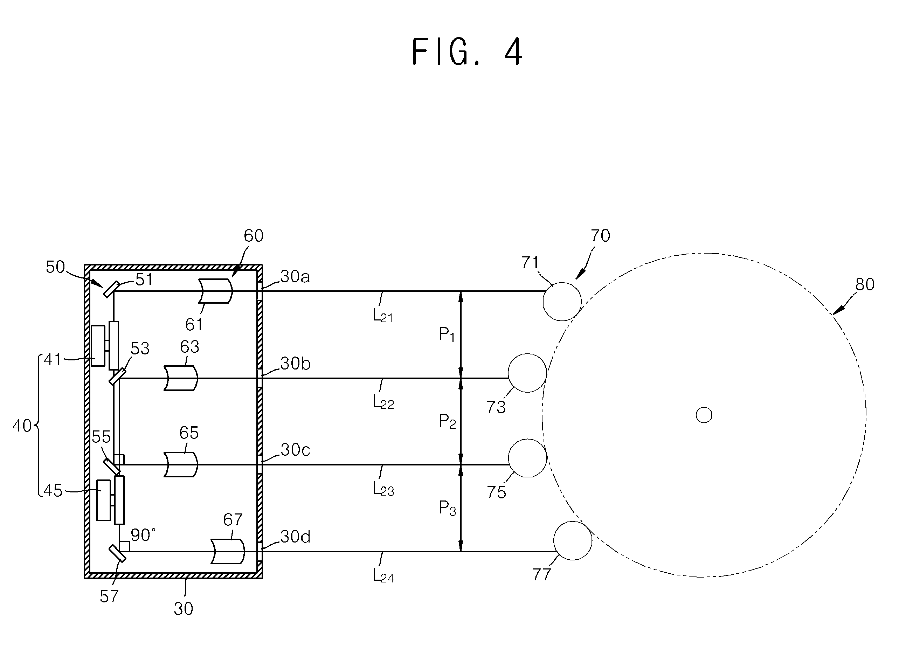

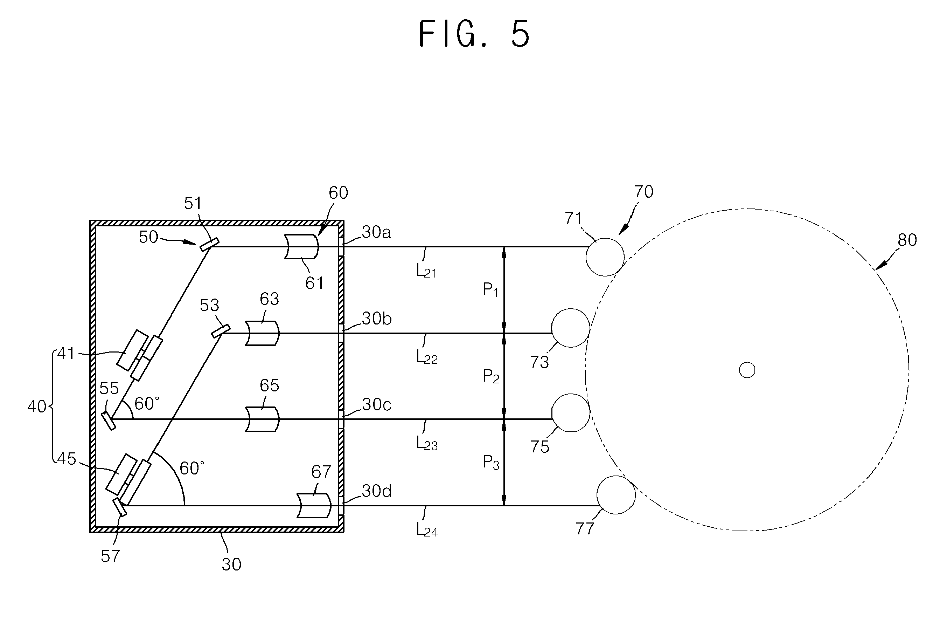

Hereinafter, aspects of Formula 1 will be described by referring to FIGs. 4 and 5. FIGs. 4 and 5 are schematic sectional views respectively illustrating optical configurations of light scanning units according to comparison examples. Here, pitches $P_1$, $P_2$, and $P_3$ are each 33mm. The diameters of the photoconductive bodies 70 are each 16mm, and the diameter of the transfer drum 80 is 120mm. Polygonal mirror devices having four reflecting surfaces are used as the beam-deflecting units 40, and the imaging lenses 61, 63, 65 and 67 are respectively configured by a single type of lens.

FIG. 4 illustrates when angle $\theta$ is 90°, and angle greater than the maximum value of Formula 1. If angle $\theta$ is greater than the maximum value of Formula 1, planes, formed by the scanning beams of the first beam-deflecting unit 41 and the second beam-deflecting unit 45, can be excessively close to each other. Accordingly, the first beam-deflecting unit 41 and the second reflecting mirror 53 can interfere with each other, and the second beam-deflecting unit 45 and the third reflecting mirror 55 interfere with each other, so that the third light beam $L_{23}$ scanned in the first beam-deflecting unit 41 and the second light beam $L_{22}$ scanned in the second beam-deflecting unit 45 can be prevented from proper operation.

FIG. 5 illustrates that angle $\theta$ is 60°. If angle $\theta$ is less than the minimum value of Formula 1, the planes, formed by beams scanned in the first beam-deflecting unit 41 and the second beam-deflecting unit 45, can maintain a sufficiently distant interval. To equally maintain an entire light path, it can be necessary to adjust the positions of the first and second beam-deflecting units 41 and 45. In this case, the second beam-deflecting unit 45 and the fourth reflecting mirror 57 may become excessively close to interfere with each other.

As compared to the examples of FIGs. 4 and 5, when Formula 1 is satisfied, the light interference among optical elements can be prevented, and a tandem-type light scanning unit having a narrowed pitch among scanning lines, can be provided.

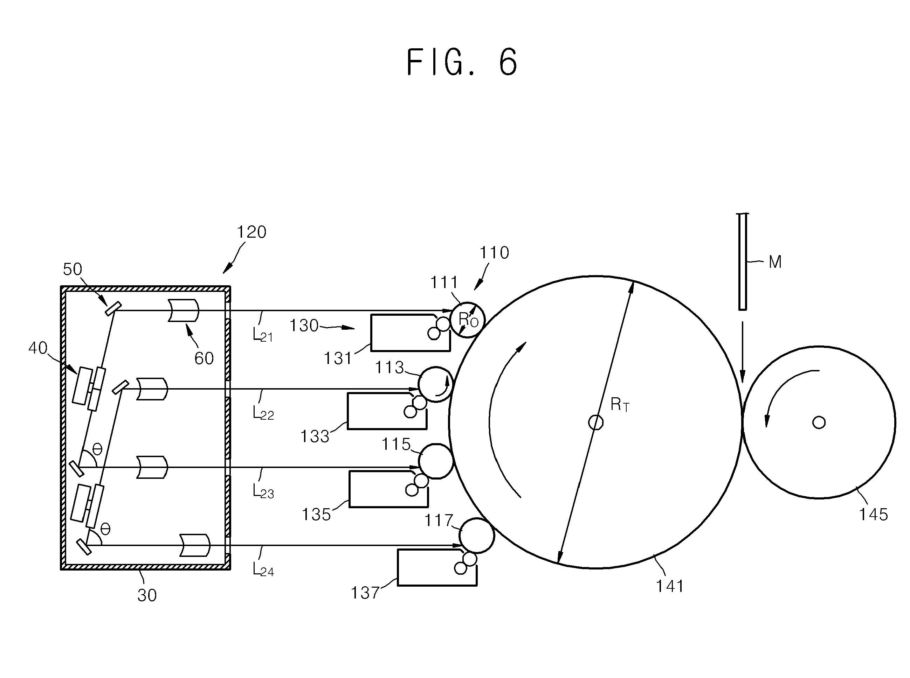

As shown in FIG. 6, an image forming apparatus 600 according, to an exemplary embodiment of the present invention, comprises a plurality of photoconductive bodies 110, a light scanning unit 120 to scan light beams to the plurality of photoconductive bodies 110 to form a latent image, a development units 130, and a transfer drum 141. The image forming apparatus 600 is a tandem-type image forming apparatus, and the photoconductive bodies 110 include first to fourth photoconductive bodies 111, 113, 115, and 117.

The light scanning unit 120 scans a light beam to the plurality of photoconductive bodies 110, and comprises a light source (not shown) accommodated in a housing 30, beam-deflecting units 40, reflecting mirrors 50, and an optical imaging system 60. The detailed description of configuration of the light scanning unit 120 is omitted, since the light scanning unit 120 is substantially the same as the light scanning unit according to the exemplary embodiment of FIG. 2 and FIG. 3.

The development units 130 correspond to the plurality of photoconductive bodies 110, and develop a predetermined color image in the plurality of photoconductive bodies 110. The development units 130 comprise first to fourth development units 131, 133, 135, and 137 that respectively correspond to first to fourth photoconductive bodies 111, 113, 115, and 117. The first to fourth development units 131, 133, 135, and 137 develop different color images, for example, black, cyan, magenta, and yellow toner images, on the corresponding photoconductive bodies 110. As shown, the photoconductive bodies are disposed along a circular arc corresponding to a shape of the transfer drum 141.

The transfer drum 141 transfers an image, developed in the plurality of photoconductive bodies 110, to a printing medium M. The transfer drum 141 is disposed so that an outer surface of the transfer drum 41 can face the plurality of photoconductive bodies 110. Accordingly, the color image developed on the photoconductive bodies 110 is transferred to the transfer drum 141, and is then transferred to the printing medium M that is transported between the transfer drum 141 and a transfer backup roller 145.

The first to fourth light paths $L_{21}$, $L_{22}$, $L_{23}$, and $L_{24}$ may be the same length. Accordingly, in the light scanning unit 120, a plurality of components performing the same functions can be used in common, thereby improving productivity, and reducing a manufacturing cost.

The light scanning unit 120 can reduce the pitch P among the first to fourth light beams $L_{21}$, $L_{22}$, $L_{23}$, and $L_{24}$, thereby allowing for the size of the transfer drum 141 and the plurality of photoconductive bodies 110 to be reduced. That is, the diameter $R_T$ of the transfer drum 141 can be approximately 120mm, and the respective diameters $R_O$ of the photoconductive bodies 111, 113, 115, and 117 can be approximately 16mm.

As described above, a light scanning unit, according to aspects of the present invention, can optimize an optical disposition of components to concurrently form a plurality of scanning lines, thereby narrowing the pitch among the scanning lines. Also, a light scanning unit, according to aspects of the present invention, can equalize the light path lengths of scanning lines, thereby allowing for the common use of optical elements, disposed in different beam paths, which have the same functions. Also, a light scanning unit, according to aspects of the present invention, can reduce the number of beam-deflecting units and reflecting mirrors, thereby reducing the numbers of assembly points and components, and reducing the size of the light scanning unit.

An image forming apparatus, employing a light scanning unit according to aspects of the present invention, can reduce the pitch between a plurality of photoconductive bodies disposed to face a transfer drum, and reduce the size of an entire configuration. While not restricted thereto, it is understood that the image forms apparatus can be used in a copier, printer and/or in a multifunction device further including a facsimile and/or scanning functionality.

Although a few embodiments of the present invention have been shown and described, it would be appreciated by those skilled in the art that changes may be made in this embodiment without departing from the principles of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A light scanning unit to control light beams in an image forming apparatus comprising a plurality of photoconductive bodies (70) disposed upon an outer surface of a transfer drum (80), the light scanning unit comprising:

   at least one light source (31) to emit the light beams;
   a first beam-deflecting unit (41) to deflect the emitted light beams to form a first and a second scanning beam;
   a plurality of reflecting mirrors (50) disposed in light paths between the first beam deflecting unit (41) and the photoconductive bodies (70), to reflect the first scanning beam at a first angle and to reflect the second scanning beam at a second angle; and
   an optical imaging system (60) disposed in light paths between the plurality of reflecting mirrors (50) and the plurality of photoconductive bodies (70), to focus the reflected first and second scanning beams onto the plurality of photoconductive bodies (70),

   wherein the first angle that is less than 90° and greater than 60°, and the second angle is supplementary to the first angle.

2. The light scanning unit according to claim 1, wherein:

   the plurality of photoconductive bodies (70) comprises first to fourth photoconductive bodies (71,73,75,77) disposed equally spaced and in order along the outer surface of the transfer drum (80);
   the light scanning unit further comprises a second beam-deflecting unit (45) to form third and fourth scanning beams; and
   two of the plurality of reflecting mirrors (50) are to reflect the third and forth scanning beams to the second and fourth photoconductive bodies (73,77) and are to reflect the first and second scanning beams to the first and third photoconductive bodies (71,75).

3. The light scanning unit according to claim 2, wherein the first and second beam-deflecting units (41,45) and the plurality of reflecting mirrors (50) are disposed so that at least one of scanning beams formed by the first beam-deflecting unit (41) crosses at least one of the scanning beams formed by the second beam-deflecting unit (45).

4. The light scanning unit according to claim 2, wherein:

   the at least one light source (31) comprises first to fourth light sources (31a,31b,31c,31d) to emit the light beams which are respectively emitted to the first to fourth photoconductive bodies (71,73,75,77) ; and
   the light beams which are emitted by the first and third light sources (31a,31b,31c), are scanned by the first beam deflecting unit (41), and light beams which are emitted in the second and fourth light sources (31b,31d) are scanned by the second beam deflecting unit.

5. The light scanning unit according to claim 4, further comprising:

   first to fourth collimating lenses (33a,33b,33c, 33d) respectively disposed on light paths between the first to fourth light sources (31a,31b, 31c,31d) and the first and second beam deflecting units, and collimate the light beams which are emitted by the first to fourth light sources (31a,31b,31c,31d); and
   first to fourth cylindrical lenses (35a,35b,35c, 35d) which are respectively disposed on light paths between the first to fourth light sources (31a,31b,31c,31d) and the first and second beam deflecting units (41,45), and shape the light beams collimated by the first to fourth collimating lenses (33a,33b,33c, 33d).

6. The light scanning unit according to any one of claims 2 to 5, wherein the plurality of reflecting mirrors (50) comprises:

   a first reflecting mirror (51) which is disposed between the first beam deflecting unit (41) and the first photoconductive body (71);
   a second reflecting mirror (55) which is disposed between the second beam deflecting unit and the second photoconductive body (73);
   a third reflecting mirror (53) which is disposed between the first beam deflecting unit (41) and the third photoconductive body (75); and
   a fourth reflecting mirror (57) which is disposed between the second beam deflecting unit and the fourth photoconductive body (77).

7. The light scanning unit according to claim 6, wherein the optical imaging system (60) comprises first to fourth imaging lenses (61,63,65,67) which are respectively disposed between the first to fourth reflecting mirrors (51,55,53,57) and the first to fourth photoconductive bodies (71,73,75,77).

8. The light scanning unit as claimed in any one of claims 1 to 7, wherein each of the emitted light beams travels a same distance from a respective light source (31) to a respective photoconductive body.

**9.** The light scanning unit as claimed in any one of claims 1 to 7, wherein a distance between adjacent reflected scanning beams is from about 29.7 mm to about 36.3 mm.

**10.** An image forming apparatus comprises:

a plurality of photoconductive bodies (70);
a light scanning unit as claimed in any one of claims 1 to 7;
a development unit disposed adjacent to each of the respective photoconductive bodies (70), and develops a predetermined color image to the respective photoconductive bodies (70); and
a transfer drum (80) which comprises a curved outer surface which faces and contacts the plurality of photoconductive bodies (70), to transfer an image which is developed in the plurality of photoconductive bodies (70) to a printing medium.

**11.** The image forming apparatus according to claim 10, wherein each of the scanning beams travels the same distance from a respective deflecting unit to a respective photoconductive body.

**12.** The image forming apparatus according to claim 10, wherein a distance between adjacent reflected scanning lines is from about 29.7 mm to about 36.3 mm.

**13.** The image forming apparatus according to claim 12, wherein the diameter of each of the photoconductive bodies (70) is approximately 16mm, and the diameter of the transfer drum (80) is approximately 120mm.

**14.** A light scanning unit to control light beams in an image forming apparatus comprising a plurality of photoconductive bodies (70) disposed upon an outer surface of a transfer drum (80), the light scanning unit comprising:

at least one light source (31) to emit the light beams; and
a first beam-deflecting unit (41) to deflect the emitted light beams to form a first and a second scanning beam; and
a mirror system to reflect the first scanning beam to define a first beam path between the first beam deflecting unit (41) and a first one of the plurality of photo conductive drums and to reflect the second scanning beam to define a second beam path between the first beam deflecting unit (41) and a second one of the plurality of photo conductive drums, the first beam path being other than the second beam deflecting path,

wherein:

the length of the first beam path is equal to the length of the second beam path, and
the plurality of photoconductive bodies (70) are disposed in an arc along the outer surface of the transfer drum (80).

**15.** The light scanning unit of claim 14, wherein the reflected first and second scanning beams are parallel to each other.

**16.** The light scanning unit of claim 15, wherein the mirror system comprises:

a first reflecting mirror (51) disposed on the first beam path, between the first beam deflecting unit (41) and the first photoconductive body (71), to reflect the first scanning beam at a first angle to the first photoconductive body (71); and
a second reflecting mirror disposed on the second beam path, between the first beam deflecting unit (41) and the second photoconductive body (73), to reflect the second scanning beam at a second angle to the second photoconductive body (73).

**17.** The light scanning unit of claim 16, wherein the first angle that is less than 90° and greater than 60°, and the second angle is supplementary to the first angle.

# FIG. 1
# (PRIOR ART)

# FIG. 2

FIG. 3

# FIG. 4

FIG. 5

EP 1 939 667 A1

# FIG. 6

**European Patent Office**

**EUROPEAN SEARCH REPORT**

Application Number

EP 07 12 0502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/196511 A1 (KIKUCHI SUSUMU [JP]) 7 October 2004 (2004-10-07) * paragraph [0020] - paragraph [0021] * * paragraph [0027] - paragraph [0034] * * figure 1 * | 1-17 | INV. G02B26/12 H04N1/191 |
| A | US 2002/036690 A1 (TANAKA TOSHIHITO [JP]) 28 March 2002 (2002-03-28) * paragraph [0045] - paragraph [0054] * * figure 2 * | 1-17 | |
| A | EP 1 388 748 A (RICOH KK [JP]) 11 February 2004 (2004-02-11) * paragraph [0026] * * paragraph [0031] - paragraph [0035] * * figures 1,5 * | 1-17 | |
| A | US 2005/179971 A1 (AMADA TAKU [JP] ET AL) 18 August 2005 (2005-08-18) * paragraph [0497] - paragraph [0501] * * figures 28,30 * | 1-17 | |
| A | EP 1 296 172 A (RICOH KK [JP]) 26 March 2003 (2003-03-26) * paragraph [0010] - paragraph [0015] * * figures 1,3,4 * | 1-17 | TECHNICAL FIELDS SEARCHED (IPC) G02B H04N |
| A | EP 0 604 077 A (XEROX CORP [US]) 29 June 1994 (1994-06-29) * column 4, line 30 - line 44 * * column 8, line 31 - column 9, line 4 * * figure 4 * | 1-17 | |
| A | US 2003/142380 A1 (KOREEDA DAISUKE [JP]) 31 July 2003 (2003-07-31) * paragraph [0075] - paragraph [0085] * * figure 2 * | 1-17 | |

The present search report has been drawn up for all claims

| Place of search | Date of completion of the search | Examiner |
|---|---|---|
| Munich | 10 March 2008 | von Hentig, Roger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 12 0502

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2008

| Patent document cited in search report | | Publication date | Patent family member(s) | | Publication date |
|---|---|---|---|---|---|
| US 2004196511 | A1 | 07-10-2004 | JP 2004309634 A<br>KR 20040087246 A | | 04-11-2004<br>13-10-2004 |
| US 2002036690 | A1 | 28-03-2002 | JP 2002098922 A | | 05-04-2002 |
| EP 1388748 | A | 11-02-2004 | NONE | | |
| US 2005179971 | A1 | 18-08-2005 | NONE | | |
| EP 1296172 | A | 26-03-2003 | DE 60204744 D1<br>DE 60204744 T2<br>JP 2003098454 A<br>US 2003058513 A1 | | 28-07-2005<br>18-05-2006<br>03-04-2003<br>27-03-2003 |
| EP 0604077 | A | 29-06-1994 | DE 69324457 D1<br>DE 69324457 T2<br>JP 6222297 A<br>US 5325381 A | | 20-05-1999<br>07-10-1999<br>12-08-1994<br>28-06-1994 |
| US 2003142380 | A1 | 31-07-2003 | JP 2003149575 A | | 21-05-2003 |

For more details about this annex : see Official Journal of the European Patent Office, No. 12/82